# EUROPÄISCHE PATENTSCHRIFT

(11) **EP 2 080 989 B1**
(45) Veröffentlichungstag und Bekanntmachung des Hinweises auf die Patenterteilung: **06.06.2012**
(21) Anmeldenummer: 08000962.4
(22) Anmeldetag: 18.01.2008
(51) Int. Cl.: G01D 3/08, G01D 5/245

(54) **Messsystem und Verfahren zur Überwachung eines Messsystems**
Measurement system and device for surveillance of a measuring system
Système de mesure et procédé de surveillance d'un système de mesure

(43) Veröffentlichungstag der Anmeldung: 22.07.2009
(73) Patentinhaber: SIEMENS AKTIENGESELLSCHAFT, 80333 München (DE)
(72) Erfinder: Finkler, Roland, Dr., 91058 Erlangen (DE)

(56) Entgegenhaltungen:
- EP-A- 0 362 407
- EP-A- 0 431 195
- EP-A- 1 205 728
- JP-A- 63 300 911

## Beschreibung

Die Erfindung betrifft ein Verfahren zur Überwachung eines Messsystems, wobei das Messsystem einen Geber zur Ermittelung der Lage eines bewegbaren Elements aufweist.

Weiterhin betrifft die Erfindung ein Messsystem, wobei das Messsystem einen Geber zur Ermittelung der Lage eines bewegbaren Elements aufweist.

Insbesondere auf dem technischen Gebiet der Automatisierungstechnik wird zur Ermittlung einer Lage eines bewegbaren Elements, wie z.B. einer Motorwelle eines Antriebs zum Antreiben einer Maschinenachse, Messsysteme, insbesondere inkrementellen Messsysteme eingesetzt. Mittels eines inkrementellen Messsystems bei der der Geber eine Referenzmarke aufweist, kann nach dem Überfahren der Referenzmarke die absolute Lage ermittelt werden, in dem nach dem Überfahren der Referenzmarke (Lage Null) die überfahrenen Inkremente lückenlos mittels eines Zählers mitgezählt werden. Der Zählerstand der überfahrenen Inkremente entspricht dabei einer Groblage, wobei im Weiteren durch Interpolation, wie z.B. in der DE 27 29 697 A1 beschrieben, eine Feinlage ermitteln wird. Groblage und Feinlage zusammen ergeben die Absolutlage.

Insbesondere bei Werkzeugmaschinen, Produktionsmaschinen und/oder bei Robotern werden solche Messsysteme üblicherweise von einer Steuer- und/oder Regeleinrichtung, die zur Steuerung und/oder Regelung von bewegbaren Elementen der Maschine dient, im Normalbetrieb mit elektrischer Energie versorgt. Wird die Steuer- und/oder Regeleinrichtung ausgeschaltet, dann ist es bei vielen derartigen Messsystemen so, dass der Zählerstand für die überfahrenen Inkremente verloren geht und/oder nach dem Ausschalten überfahrene Inkremente nicht mehr mitgezählt werden. Nach dem Wiedereinschalten der Steuer- und/oder Regeleinrichtung muss bei solchen Messsystemen zunächst erst wieder die Referenzmarke überfahren werden, um die Absolutlage bestimmen zu können.

Nach dem Stand der Technik kann dieses Problem jedoch gelöst werden, in dem man eine Batterie vorsieht, die das Messsystem auch nach dem Ausschalten der Steuer- und/oder Regeleinrichtung versorgt. Ein solches Messsystem ist z.B. in der EP 0 362 407 A1 beschrieben. Dabei werden z.B. nicht alle elektrischen Bestandteile des Gebers mit Energie versorgt, sondern es wird nur ein Teil des Gebers mit elektrischer Energie versorgt. Der Geber wird solchermaßen in einem energiesparenderen Modus als im Normalbetrieb betrieben. Eventuell wird z.B. nur ein einzelnes RAM zur Speicherung des Zählerstandes versorgt (dann können allerdings etwaige Bewegungen des bewegbaren Elements bei ausgeschalteter Steuer-und/oder Regeleinrichtung nicht erfasst werden). Eventuell wird auch z.B. eine sonst kontinuierlich betriebene Leuchtdiode eines optischen Gebers nur gepulst betrieben und die Interpolationselektronik gar nicht betrieben, so dass die Feinlage gar nicht mehr oder nicht mehr so gut erfasst wird, wie sonst üblich aber immer noch ausreichend um die überfahrenen Inkremente zu zählen. Weiterhin sind Geber z.B. aus der DE 35 86 937 T2 und der EP 0 158 781 A1 bekannt.

Nachteilig bei diesem Stand der Technik ist, dass bei ungenügender Energieversorgung bei Ausfall der Batterie, der Zählerstand der überfahrenen Elemente gelöscht oder verändert werden kann. Dies kann insbesondere bei einem zu langen Ausfall der externen Energieversorgung des Gebers, welche im Normalbetrieb die Energieversorgung des Gebers sicherstellt, auftreten. Nach einem Wiederzuschalten der Steuerungs-und/oder Regeleinrichtung und damit nach Wiederherstellung der externen elektrischen Versorgungsspannung für den Normalbetrieb des Gebers ist dann nicht mehr sichergestellt, dass die vom Geber ermittelte Lage noch tatsächlich mit der wirklichen Lage des bewegbaren Elements übereinstimmt, weil zwischenzeitlich die von der Batterie erzeugte Hilfsversorgungsspannung zu weit abgesunken ist um zumindest die wichtigen elektrischen Bauteile des Gebers ausreichend mit Energie zu versorgen.

Ferner ist aus der DE 20 2004 000 413 U1 ein Geber bekannt, bei dem ein nichtflüchtiger Speicher zur Speicherung des Zählerstandes verwendet wird, wobei als unabhängige Energiequelle ein elektromechanischer Schnappmechanismus dient. Hierbei ist unter anderem die relativ aufwändige Mechanik nachteilig.

Der Erfindung liegt die Aufgabe zugrunde eine, aufgrund eines Ausfalls der elektrischen Energieversorgung des Gebers herrührende, fehlerhaft ermittelte Lage zu erkennen.

Diese Aufgabe wird gelöst durch ein Verfahren zur Überwachung eines Messsystems, wobei das Messsystem einen Geber zur Ermittelung der Lage eines bewegbaren Elements aufweist, wobei das Messsystem einen ersten Energiespeicher aufweist, der bei Ausfall einer externen elektrischen Versorgungsspannung Uᵥ des Gebers zumindest ein Teil des Gebers derart mit elektrischer Energie versorgt, dass ein gespeicherter Zählerstand des Gebers bei Ausfall der externen elektrischen Versorgungsspannung erhalten bleibt, wobei der erste Energiespeicher eine erste Hilfsversorgungsspannung erzeugt, dadurch gekennzeichnet, dass ein erstes Datum beim erstmaligen Detektieren einer Referenzmarke des Gebers im Geber gespeichert wird, wobei bei Ausfall der externen elektrischen Versorgungsspannung des Gebers und Ausfall der ersten Hilfsversorgungsspannung des Gebers, das erste Datum gelöscht wird.

Weiterhin wird diese Aufgabe gelöst durch ein Messsystem, wobei das Messsystem einen Geber zur Ermittelung der Lage eines bewegbaren Elements aufweist, wobei das Messsystem einen ersten Energiespeicher aufweist, der bei Ausfall einer externen elektrischen Versorgungsspannung des Gebers zumindest ein Teil des Gebers derart mit elektrischer Energie versorgt, dass ein gespeicherter Zählerstand des Gebers bei Ausfall der externen elektrischen Versorgungsspannung erhalten bleibt, wobei der erste Energiespeicher eine erste Hilfsversorgungsspannung erzeugt, dadurch gekennzeichnet, dass ein erstes Datum beim erstmaligen Detektieren einer Referenzmarke des Gebers im Geber speicherbar ist, wobei bei Ausfall einer externen elektrischen Versorgungsspannung des Gebers und Ausfall einer ersten Hilfsversorgungsspannung des Gebers, das erste Datum löschbar ist.

Vorteilhafte Ausbildungen der Erfindung ergeben sich aus den abhängigen Ansprüchen.

Vorteilhafte Ausbildung des Verfahrens ergeben sich analog zur vorteilhaften Ausbildung des Messsystems und umgekehrt.

Es erweist sich als vorteilhaft, wenn nach Wiederherstellung der externen elektrischen Versorgungsspannung das erste Datum vom Geber an die Überwachungseinheit übermittelt wird und von einer Überwachungseinheit das erste Datum mit einem zweiten Datum verglichen wird, wobei bei Nichtübereinstimmung von erstem Datum und zweitem Datum auf eine fehlerhaft ermittelte Lage erkannt wird. Hierdurch wird eine zuverlässige Erkennung einer fehlerhaft ermittelten Lage ermöglicht.

Weiterhin erweist es sich als vorteilhaft, wenn nach Wiederherstellung der externen elektrischen Versorgungsspannung im Falle eines Vorliegens eines gelöschten ersten Datums, die ermittelte Lage mit einer fehlerhaften Prüfsumme an eine Überwachungseinheit übermittelt wird, wobei die Prüfsumme von der Überwachungseinheit überprüft wird und bei einer als fehlerhaft erkannten Prüfsumme auf eine fehlerhaft ermittelte Lage erkannt wird. Hierdurch wird auf einfache Art und Weise eine fehlerhafte ermittelte Lage eines Gebers erkannt.

Weiterhin erweist es sich als vorteilhaft, wenn das erste Datum in Form eines Bits vorliegt. Eine Ausbildung des ersten Datums in Form eines Bits stellt eine besonders einfache Ausbildung des Datums dar.

Weiterhin erweist es sich als vorteilhaft, wenn das zweite Datum an den Geber übermittelt wird und beim erstmaligen Detektieren einer Referenzmarke des Gebers als erstes Datum im Geber gespeichert wird. Durch diese Maßnahme wird ein einfacher Abgleich bei z.B. einer erstmaligen Inbetriebnahme einer Maschine von ersten und zweiten Datum sichergestellt. Das zweite Datum kann dabei z.B. in Form der Seriennummer der Steuer- und/oder Regeleinrichtung vorliegen.

Ferner erweist es sich als vorteilhaft, wenn die Überwachungseinheit Bestandteil einer Steuer- und/oder Regeleinrichtung zur Steuer und und/oder Regelung des bewegbaren Elements ist, da dann auf zusätzliche Hardware zur Realisierung der Überwachungseinheit verzichtet werden kann.

Ferner erweist es sich als vorteilhaft, wenn das erste Datum zusammen mit der ermittelten Lage übermittelt wird, da dann das Datum zusammen mit der ermittelten Lage z.B. innerhalb eines Datentelegramms übermittelt werden kann und solchermaßen eine einfache Übermittlung des ersten Datums ermöglicht wird.

Weiterhin erweist es sich als vorteilhaft, wenn bei Ausfall der externen Versorgungsspannung des Gebers zumindest ein Teil des Gebers von dem Energiespeicher zusätzlich derart mit elektrischer Energie versorgt wird, dass überfahrene Inkremente gezählt werden, da dann auch im Falle einer Bewegung des bewegbaren Elements während eines Ausfalls der Versorgungsspannung der Zählerstand korrekt ist.

Ferner erweist es sich als vorteilhaft, wenn nach Wiederherstellung der externen elektrischen Versorgungsspannung das erste Datum vom Geber an eine Überwachungseinheit übermittelbar ist, wobei von der Überwachungseinheit das erste Datum mit einem zweiten Datum vergleichbar ist, wobei die Überwachungseinheit bei Nichtübereinstimmung von erstem Datum und zweitem Datum auf eine fehlerhaft ermittelte Lage erkennt. Hierdurch wird eine zuverlässige Erkennung einer fehlerhaft ermittelten Lage ermöglicht.

Ferner erweist es sich als vorteilhaft, wenn nach Wiederherstellung der externen elektrischen Versorgungsspannung im Falle eines Vorliegens eines gelöschten ersten Datums, die ermittelte Lage mit einer fehlerhaften Prüfsumme an eine Überwachungseinheit übermittelbar ist, wobei die Prüfsumme von der Überwachungseinheit überprüfbar ist, wobei die Überwachungseinheit bei einer als fehlerhaft erkannten Prüfsumme auf eine fehlerhaft ermittelte Lage erkennt. Hierdurch wird auf einfache Art und Weise eine fehlerhafte ermittelte Lage eines Gebers erkannt.

Ferner erweist es sich als vorteilhaft, wenn das Messsystem einen zweiten Energiespeicher aufweist, wobei der zweite Energiespeicher die Energie zur Löschung des ersten Datums bereitstellt. Hierdurch wird auf einfache Art und Weise die Energieversorgung für den Löschvorgang des ersten Datums sichergestellt.

Weiterhin erweist es sich als vorteilhaft, eine Werkzeugmaschine, Produktionsmaschine und/oder einen Roboter mit dem erfindungsgemäßen Messsystem auszubilden.

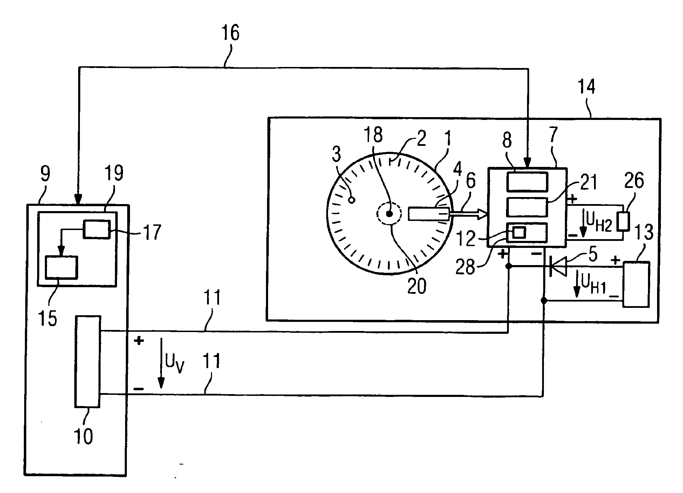

Ein Ausführungsbeispiel der Erfindung ist in der Zeichnung dargestellt und wird im Folgenden näher erläutert. Dabei zeigt die Figur ein erfindungsgemäßes Messsystem.

In der Figur ist in Form einer schematisierten Darstellung das erfindungsgemäße Messsystem dargestellt, wobei der Übersichtlichkeit halber nur die zum Verständnis der Erfindung notwendigen Elemente dargestellt sind. Ein Geber 14 weist dabei eine Scheibe 1 auf, deren Drehachse 18 mit einem bewegbaren Element, dass im Rahmen des Ausführungsbeispiels in Form einer Motorwelle 20 vorliegt, verbunden ist. Der Geber 14 misst solchermaßen die Lage, d.h. im Rahmen des Ausführungsbeispiels den Drehwinkel der Motorwelle 20. Der Geber 14 weist hierzu eine Inkrementalspur auf, die sich aus kreisförmig angeordneten Inkrementen zusammensetzt. In der Figur ist beispielhaft ein Inkrement mit dem Bezugszeichen 2 versehen. Die Scheibe 1 ist weiterhin mit einer Referenzmarke 3 versehen. Mittels einer Sensorik 4 wird bei einer Drehbewegung der Scheibe 1 ein Durchlaufen der Referenzmarke 3 sowie das Durchlaufen der Inkremente registriert und an eine Auswerteeinheit 7 übertragen, was durch einen Pfeil 6 angedeutet ist. Die durchlaufenden Inkremente werden von einem Zähler 21 gezählt und der Zählerstand in einem Speicher 8 abgelegt. Anhand des Zählerstandes kann dann die Lage der Motorwelle 20 bestimmt werden und z.B. über eine Verbindung 16 an eine Steuer- und/oder Regeleinrichtung 9, die zur Steuer- und /oder Regelung der Lage des bewegbaren Elements dient, übermittelt werden.

Zur Energieversorgung im Normalbetrieb des Gebers weist das Messsystem eine Spannungserzeugungseinrichtung 10 auf, die zur Energieversorgung des Gebers 14 eine externe elektrische Versorgungsspannung Uᵥ erzeugt und über Spannungsversorgungsleitungen 11 den Geber 14 von extern mit Energie versorgt. Die Spannungsversorgungseinrichtung 10 ist im Rahmen des Ausführungsbeispiels Bestandteil der Steuer- und/oder Regeleinrichtung 9. Dies muss jedoch nicht notwendigerweise so sein, sondern die Spannungserzeugungseinrichtung 10 kann auch unabhängig von der Steuer- und/oder Regeleinrichtung 9 außerhalb der Steuer- und/oder Regeleinrichtung 9 angeordnet sein.

Weiterhin weist der Geber 14 einen ersten elektrischen Energiespeicher 13 auf, der z.B. in Form einer Batterie oder eines Kondensators oder eine Kombination von beiden, ausgebildet sein. Der erste Energiespeicher 13 erzeugt eine erste Hilfsversorgungsspannung U_{H1}. Bei Ausfall der externen elektrischen Versorgungsspannung Uᵥ wird durch den ersten Energiespeicher 13 über einen gewissen Zeitraum zumindest einen Teil des Gebers derart mit elektrischer Energie versorgt, dass der gespeicherte Zählerstand des Gebers im Speicher 8, erhalten bleibt. Der erste Energiespeicher 13 ist dabei über eine Entkopplungsdiode 5 von der Spannungserzeugungseinrichtung 10 elektrisch entkoppelt. Bei Ausfall der externen Versorgungsspannung Uᵥ liegt unter Vernachlässigung des Spannungsabfalls an der Entkopplungsdiode 5 die erste Hilfsversorgungsspannung U_{H1} an den Versorgungsleitungen 11, an.

Wenn die Spannungserzeugungseinrichtung 10 für längere Zeit ausfällt oder abgeschaltet ist und der erste Energiespeicher 13 sich infolge zunehmend entleert sinkt die erste Hilfsversorgungsspannung U_{H1} mit der Zeit ab. Wenn die erste Hilfsversorgungsspannung U_{H1} unter einen kritischen Wert abgesunken ist (Das Absinken der erste Hilfsversorgungsspannung U_{H1} unter den kritischen Wert stellt einen Ausfall der ersten Hilfsversorgungsspannung dar), geht der Zählerstand im Speicher 8 verloren, d.h. er wird gelöscht oder verändert. Dies hat eine fehlerhaft ermittelte Lage zur Folge, was von der Steuer- und/oder Regeleinrichtung 9 bei handelsüblichen Messsystemen nicht bemerkt wird. Dies kann zu einer fehlerhaften Steuerung und/oder Regelung der Bewegung des bewegbaren Elements 20 führen.

Die Steuer- und/oder Regeleinrichtung 9 ist mit dem Geber 14 über eine Verbindung 16 zum Austausch von Daten miteinander verbunden. Erfindungsgemäß wird ein erstes Datum 12 beim erstmaligen Detektieren der Referenzmarke 3 durch die Sensorik 4 des Gebers im Speicher 8 gespeichert, wobei bei Ausfall der externen elektrischen Energieversorgungsspannung Uᵥ des Gebers 14 und Ausfall der ersten Hilfsversorgungsspannung U_{H1} des Gebers 14 das erste Datum 12 gelöscht wird. Im Rahmen des Ausführungsbeispiels ist dabei das erste Datum 12 in einem nichtflüchtigen Speicher 28 gespeichert. Um auch nach Ausfall der ersten Hilfsenergieversorgungsspannung U_{H1} noch Energiereserven zu besitzen, um das Löschen des ersten Datums 12 im nichtflüchtigen Speicher 28 zu ermöglichen, weist der Geber 14 einen zweiten Energiespeicher 26, z.B. in Form eines Kondensators auf, der eine zweite Hilfsversorgungsspannung U_{H2} erzeugt. Das erste Datum 12 kann jedoch auch alternativ in einem flüchtigen Speicher gespeichert sein. In diesem Fall ist kein zweiter Energiespeicher 26 notwendig, da mit dem Ausfall der ersten Hilfsversorgungsspannung U_{H1} auch gleichzeitig der flüchtige Speicher und somit das erste Datum 12 gelöscht wird. Es sei an dieser Stelle angemerkt, dass im Rahmen der Erfindung unter einem Löschen eines Datums auch ein Verändern des Datums bei einem Energieausfall verstanden wird.

Die Steuer- und/oder Regeleinrichtung 9 weist eine Recheneinrichtung 19 auf, mit deren Hilfe die Steuer- und/oder Regeleinrichtung das bewegbare Element entsprechend bewegt. Die Recheneinrichtung 19 kann z.B. in Form einer numerischen Steuerung (NC-Steuerung) einer Maschine ausgebildet sein. Weiterhin weist die Steuer- und/oder Regeleinrichtung 9 eine Überwachungseinheit 15, welche im Rahmen des Ausführungsbeispiels in Form von Software, die auf der Recheneinrichtung 19 abläuft, ausgebildet ist. Die Überwachungseinheit kann aber auch in Form einer separaten Hardware auf der Steuer-und/oder Regeleinrichtung 9 realisiert sein.

Wird die Steuer- und/oder Regeleinheit 9 z.B. nach einem Ausschalten wieder eingeschalten und somit die externe elektrische Versorgungsspannung Uᵥ wieder hergestellt, dann wird das erste Datum vom Geber 14 an die Überwachungseinheit 15 übermittelt und anschließend wird von der Überwachungseinheit 15 das erste Datum 12 mit einem in der Recheneinheit 19 gespeichertem zweiten Datum verglichen und bei Nichtübereinstimmung vom ersten Datum und zweiten Datum auf eine fehlerhaft ermittelte Lage erkannt.

Im einfachsten Fall besteht das erste Datum aus der Binärzahl "1". Beim erstmaligen Einschalten des Gebers wird dabei das erste Datum definiert auf binär "0" gesetzt. Wenn die Sensorik 4 die Referenzmarke 3 erstmalig detektiert wird das erste Datum 12 im Geber gespeichert, in dem es auf "1" gesetzt wird. Nach Ausfall der extern elektrischen Energieversorgung Uᵥ des Gebers 14 wird bei Ausfall der ersten Hilfsversorgungsspannung U_{H1} des Gebers 14 das erste Datum 12 gelöscht, in dem es auf binär "0" gesetzt wird. Nach Wiederherstellung der extern elektrischen Versorgungsspannung Uᵥ wird das erste Datum 12, d.h. die binäre "0" vom Geber an die Überwachungseinheit 15 übermittelt und von der Überwachungseinheit 15 mit einem zweiten Datum 17 verglichen, indem überprüft wird, ob das erste Datum 12 einen Wert von binär "0" oder "1" aufweist. Es sei an dieser Stelle angemerkt, dass im Rahmen der Erfindung auch eine Abfrage ob das erste Datum einen Wert von binär "1" oder binär "0" aufweist als Vergleich mit einem zweiten Datum 17, das bei dieser Ausführungsform der Erfindung ein Wert von binär "1" aufweist, verstanden wird. Falls das erste Datum 12 und das zweite Datum 17 nicht übereinstimmen, wird auf eine fehlerhaft ermittelte Lage erkannt

Das erste und das zweite Datum müssen aber nicht unbedingt wie oben beschrieben in Form eines Bits vorliegen, sondern können auch aus einer Anzahl von Zahlen und/oder Buchstaben bestehen. So kann z.B. das zweite Datum 17 in Form der Seriennummer der Recheneinrichtung 19 vorliegen. In der Recheneinrichtung 19 ist das zweite Datum 17 gespeichert. Das zweite Datum 17 wird dann an den Geber 14 übermittelt und dort beim erstmaligen Detektieren der Referenzmarke 3 des Gebers 14 als erstes Datum 12 gespeichert. Wenn z.B. anschließend die Steuer- und/oder Regeleinrichtung 9 ausgeschaltet und anschließend wieder eingeschaltet wird, wird zunächst das erste Datum 12 an die Steuer- und/oder Regeleinrichtung 9 und insbesondere an die Überwachungseinheit 15 übermittelt um dort mit dem zweiten Datum 17 verglichen. Falls das erste Datum 12 und das zweite Datum 17 nicht übereinstimmen, wird auf eine fehlerhaft ermittelte Lage erkannt, da dann zwischenzeitlich während des Spannungsausfalls der externen elektrischen Versorgungsspannung die erste Hilfsversorgungsspannung U_{H1} ausgefallen ist und somit sich der Zählerstand in der Auswerteeinheit 7 verändert haben könnte. Vorzugsweise wird dabei das erste Datum 12 zusammen mit der ermittelten Lage vom Geber 14 an die Steuer- und/oder Regeleinrichtung 9 und insbesondere an die Überwachungseinheit 15 z.B. innerhalb eines Datentelegramms übertragen.

Alternativ zur oben beschriebenen Auswertung kann das erste Datum 12 aber auch schon im Geber 14 ausgewertet werden. Bei dieser Ausbildung der Erfindung überprüft die Auswerteeinheit 7 nach Wiederherstellung der extern elektrischen Versorgungsspannung U_{H1} das erste Datum 12 und im Fall eines Vorliegens eines gelöschten ersten Datums wird die ermittelte Lage von der Auswerteeinheit 7 bewusst mit einer fehlerhaften Prüfsumme an die Überwachungseinheit 15 übermittelt, wobei die Prüfsumme von der Überwachungseinheit überprüft wird und bei einer als fehlerhaft erkannten Prüfsumme auf eine fehlerhaft ermittelte Lage erkannt wird.

Bei der Prüfsumme kann es sich dabei z.B. um eine CRC-Prüfsumme, die zusammen mit jedem übertragenen Lagewert an die Steuer- und/oder Regeleinrichtung 9 übermittelt wird, handeln.

Das erstmalige Detektieren der Referenzmarke kann z.B. bei einer erstmaligen Inbetriebnahme des Messsystems nach Lieferung und Aufstellung der Maschine erfolgen.

Es sei an dieser Stelle angemerkt, dass in der Figur nur die zum Verständnis wesentlichen Elemente des Gebers 14 dargestellt sind. Der Geber 14 kann z.B. auch über mehrere Inkrementalspuren verfügen und/oder über mehrere Sensoriken 4 zur Erfassung z.B. einer Feinlage (Sinus/Cosinus Spursignale), sowie über mehrere Zähler und mehrere Zählerstände zur Erfassung der laufenden Inkremente. Der erste Energiespeicher 13 versorgt dann entsprechend den Speicher 8 derart, dass die einzelnen Zählerstände bei Ausfall der externen Energieversorgungsspannung erhalten bleiben.

Weiterhin sei an dieser Stelle angemerkt, dass der erste Energiespeicher 13 und/oder der zweite Energiespeicher 26 auch außerhalb des Gebers 14 angeordnet sein können.

## Patentansprüche

1. Verfahren zur Überwachung eines Messsystems, wobei das Messsystem einen Geber (14) zur Ermittelung der Lage eines bewegbaren Elements (20) aufweist, wobei das Messsystem einen ersten Energiespeicher (13) aufweist, der bei Ausfall einer externen elektrischen Versorgungsspannung (Uᵥ) des Gebers (14) zumindest ein Teil des Gebers (14) derart mit elektrischer Energie versorgt, dass ein gespeicherter Zählerstand des Gebers (14) bei Ausfall der externen elektrischen Versorgungsspannung (Uᵥ) erhalten bleibt, wobei der erste Energiespeicher (13) eine erste Hilfsversorgungsspannung (U_{H1}) erzeugt, **dadurch gekennzeichnet, dass** ein erstes Datum (12) beim erstmaligen Detektieren einer Referenzmarke (3) des Gebers (14) im Geber (14) gespeichert wird, wobei bei Ausfall der externen elektrischen Versorgungsspannung (Uᵥ) des Gebers und Ausfall der ersten Hilfsversorgungsspannung (U_{H1}) des Gebers (14), das erste Datum (12) gelöscht wird.

2. Verfahren nach Anspruch 1, **dadurch gekennzeichnet, dass**, nach Wiederherstellung der externen elektrischen Versorgungsspannung (Uᵥ) das erste Datum (12) vom Geber (14) an eine Überwachungseinheit (15) übermittelt wird und von der Überwachungseinheit (15) das erste Datum (12) mit einem zweiten Datum (17) verglichen wird, wobei bei Nichtübereinstimmung von erstem Datum (12) und zweitem Datum (17) auf eine fehlerhaft ermittelte Lage erkannt wird.

3. Verfahren nach Anspruch 1, **dadurch gekennzeichnet, dass** nach Wiederherstellung der externen elektrischen Versorgungsspannung (Uᵥ) im Falle eines Vorliegens eines gelöschten ersten Datums (12), die ermittelte Lage mit einer fehlerhaften Prüfsumme an eine Überwachungseinheit (15) übermittelt wird, wobei die Prüfsumme von der Überwachungseinheit (15) überprüft wird und bei einer als fehlerhaft erkannten Prüfsumme auf eine fehlerhaft ermittelte Lage erkannt wird.

4. Verfahren nach Anspruch 1, 2 oder 3, **dadurch gekennzeichnet, dass** das erste Datum (12) in Form eines Bits vorliegt.

5. Verfahren nach Anspruch 2 oder 4, **dadurch gekennzeichnet, dass** das zweite Datum (17) an den Geber (14) übermittelt wird und beim erstmaligen Detektieren einer Referenzmarke (3) des Gebers (14) als erstes Datum (12) im Geber gespeichert wird.

6. Verfahren nach einem der vorherigen Ansprüche, **dadurch gekennzeichnet, dass** die Überwachungseinheit (15) Bestandteil einer Steuer- und/oder Regeleinrichtung (9) zur Steuer und und/oder Regelung des bewegbaren Elements ist.

7. Verfahren nach einem der Ansprüche 2, 4, 5, und 6, **dadurch gekennzeichnet, dass** das erste Datum (12) zusammen mit der ermittelten Lage übermittelt wird.

8. Verfahren einem der vorherigen Ansprüche, **dadurch gekennzeichnet, dass** bei Ausfall der externen Versorgungsspannung (Uᵥ) des Gebers (14) zumindest ein Teil des Gebers (14) von dem ersten Energiespeicher (13) zusätzlich derart mit elektrischer Energie versorgt wird, dass überfahrene Inkremente gezählt werden.

9. Messsystem, wobei das Messsystem einen Geber (14) zur Ermittelung der Lage eines bewegbaren Elements (20) aufweist, wobei das Messsystem einen ersten Energiespeicher (13) aufweist, der bei Ausfall einer externen elektrischen Versorgungsspannung (Uᵥ) des Gebers (14) zumindest ein Teil des Gebers (14) derart mit elektrischer Energie versorgt, dass ein gespeicherter Zählerstand des Gebers (14) bei Ausfall der externen elektrischen Versorgungsspannung (Uᵥ) erhalten bleibt, wobei der erste Energiespeicher (13) eine erste Hilfsversorgungsspannung (U_{H1}) erzeugt, **dadurch gekennzeichnet, dass** ein erstes Datum (12) beim erstmaligen Detektieren einer Referenzmarke (3) des Gebers (14) im Geber (14) speicherbar ist, wobei bei Ausfall einer externen elektrischen Versorgungsspannung (Uᵥ) des Gebers (14) und Ausfall einer ersten Hilfsversorgungsspannung (U_{H1}) des Gebers (14), das erste Datum (12) löschbar ist.

10. Messsystem nach Anspruch 9, **dadurch gekennzeichnet, dass** nach Wiederherstellung der externen elektrischen Versorgungsspannung (Uᵥ) das erste Datum (12) vom Geber (14) an eine Überwachungseinheit (15) übermittelbar ist, wobei von der Überwachungseinheit (15) das erste Datum (12) mit einem zweiten Datum (17) vergleichbar ist, wobei die Überwachungseinheit (15) bei Nichtübereinstimmung von erstem Datum und zweitem Datum auf eine fehlerhaft ermittelte Lage erkennt.

11. Messsystem nach Anspruch 9, **dadurch gekennzeichnet, dass** nach Wiederherstellung der externen elektrischen Versorgungsspannung (Uᵥ) im Falle eines Vorliegens eines gelöschten ersten Datums (12), die ermittelte Lage mit einer fehlerhaften Prüfsumme an eine Überwachungseinheit (15) übermittelbar ist, wobei die Prüfsumme von der Überwachungseinheit (15) überprüfbar ist, wobei die Überwachungseinheit (15) bei einer als fehlerhaft erkannten Prüfsumme auf eine fehlerhaft ermittelte Lage erkennt.

12. Messsystem nach einem der Ansprüche 9 bis 11, **dadurch gekennzeichnet, dass** das Messsystem einen zweiten Energiespeicher (26) aufweist, wobei der zweite Energiespeicher (26) die Energie zur Löschung des ersten Datums (12) bereitstellt.

13. Werkzeugmaschine, Produktionsmaschine und/oder Roboter mit einem Messsystem nach einen der Anspruche 9 bis 12.

## Claims

1. Method for monitoring a measurement system, wherein the measurement system has a transmitter (14) for determining the position of a movable element (20), wherein the measurement system has a first energy store (13) which, in the event of failure of an external electrical supply voltage (Uᵥ) of the transmitter (14), supplies at least a part of the transmitter (14) with electrical power such that a stored count of the transmitter (14) is maintained in the event of failure of the external electrical supply voltage (Uᵥ), wherein the first energy store (13) produces a first auxiliary supply voltage (U_{H1}), **characterized in that** a first data item (12) is stored in the transmitter (14) when a reference mark (3) of the transmitter (14) is detected for the first time, wherein the first data item (12) is deleted in the event of failure of the external electrical supply voltage (Uᵥ) for the transmitter and failure of the first auxiliary supply voltage (U_{H1}) for the transmitter (14).

2. Method according to Claim 1, **characterized in that** once the external electrical supply voltage (Uᵥ) has been restored, the first data item (12) is transmitted from the transmitter (14) to a monitoring unit (15), and the monitoring unit (15) compares the first data item (12) with a second data item (17), wherein an incorrectly determined position is identified if the first data item (12) and the second data item (17) do not match.

3. Method according to Claim 1, **characterized in that**, once the external electrical supply voltage (Uᵥ) has been restored, and if a deleted first data item (12) is present, the determined position is transmitted with an incorrect checksum to a monitoring unit (15), wherein the checksum is checked by the monitoring unit (15), and if the checksum is identified as being incorrect, an incorrectly determined position is identified.

4. Method according to Claim 1, 2 or 3, **characterized in that** the first data item (12) is in the form of a bit.

5. Method according to Claim 2 or 4, **characterized in that** the second data item (17) is transmitted to the transmitter (14) and, when a reference mark (3) of the transmitter (14) is detected for the first time, is stored as the first data item (12) in the transmitter.

6. Method according to one of the preceding claims, **characterized in that** the monitoring unit (15) is a component of an open-loop and/or closed-loop control device (9) for open-loop control and/or closed-loop control of the movable element.

7. Method according to one of Claims 2, 4, 5 and 6, **characterized in that** the first data item (12) is transmitted together with the determined position.

8. Method according to one of the preceding claims, **characterized in that**, in the event of failure of the external supply voltage (Uᵥ) for the transmitter (14), at least a part of the transmitter (14) is additionally supplied with electrical power from the first energy store (13), such that increments which have been moved over are counted.

9. Measurement system wherein the measurement system has a transmitter (14) for determining the position of a movable element (20), wherein the measurement system has a first energy store (13) which, in the event of failure of an external electrical supply voltage (Uᵥ) for the transmitter (14), supplies electrical power to at least a part of the transmitter (14) such that a stored count of the transmitter (14) is maintained in the event of failure of the external electrical supply voltage (Uᵥ), wherein the first energy store (13) produces a first auxiliary supply voltage (U_{H1}), **characterized in that** a first data item (12) can be stored in the transmitter (14) when a reference mark (3) of the transmitter (14) is detected for the first time, wherein the first data item (12) can be deleted in the event of failure of an external electrical supply voltage (Uᵥ) for the transmitter (14) and failure of a first auxiliary supply voltage (U_{H1}) for the transmitter (14).

10. Measurement system according to Claim 9, **characterized in that**, once the external electrical supply voltage (Uᵥ) has been restored, the first data item (12) can be transmitted from the transmitter (14) to a monitoring unit (15), wherein the monitoring unit (15) can compare the first data item (12) with a second data item (17), wherein the monitoring unit (15) identifies an incorrectly determined position if the first data item and the second data item do not match.

11. Measurement system according to Claim 9, **characterized in that**, once the external electrical supply voltage (Uᵥ) has been restored, and if a deleted first data item (12) is present, the determined position can be transmitted with an incorrect checksum to a monitoring unit (15), wherein the checksum can be checked by the monitoring unit (15), wherein if a checksum is identified as being incorrect, the monitoring unit (15) identifies an incorrectly determined position.

12. Measurement system according to one of Claims 9 to 11, **characterized in that** the measurement system has a second energy store (26), wherein the second energy store (26) provides the power to delete the first data item (12).

13. Machine tool, production machine and/or robot having a measurement system according to one of Claims 9 to 12.

## Revendications

1. Procédé de contrôle d'un système de mesure, dans lequel le système de mesure a un capteur (14) de détermination de la position d'un élément (20) mobile, le système de mesure ayant un premier accumulateur (13) d'énergie, qui, lorsque la tension (Uᵥ) électrique extérieure d'alimentation du capteur (14) est coupée, alimente au moins une partie du capteur (14) en énergie électrique, de manière à ce qu'un état de compteur mémorisé du capteur (14) reste conservé lorsque la tension (Uᵥ) électrique extérieure d'alimentation est coupée, le premier accumulateur (13) d'énergie produisant une première tension (U_{H1}) auxiliaire d'alimentation, **caractérisé en ce que** l'on mémorise dans le capteur (14) une première donnée (12) lorsqu'on détecte pour la première fois un repère (3) de référence du capteur (14), dans lequel on efface la première donnée (12) lorsque la tension (Uᵥ) électrique extérieure d'alimentation du capteur et la première tension (U_{H1}) auxiliaire d'alimentation du capteur (14) sont coupées.

2. Procédé suivant la revendication 1, **caractérisé en ce que**, après le rétablissement de la tension (Uᵥ) électrique extérieure d'alimentation, on transmet la première donnée (12) du capteur (14) à une unité (15) de contrôle et on compare par l'unité (15) de contrôle la première donnée (12) à une deuxième donnée (17), une position déterminée défectueuse étant détectée s'il n'y a pas coïncidence entre la première donnée (12) et la deuxième donnée (17).

3. Procédé suivant la revendication 1, **caractérisé en ce que**, après le rétablissement de la tension (Uᵥ) électrique extérieure d'alimentation et dans le cas d'une présence d'une première donnée (12) effacée, la position déterminée ayant une somme de contrôle défectueuse est transmise à une unité (15) de contrôle, la somme de contrôle étant contrôlée par l'unité (15) de contrôle et, si la somme de contrôle est détectée comme défectueuse, étant détectée comme une position déterminée défectueuse.

4. Procédé suivant la revendication 1, 2 ou 3, **caractérisé en ce que** la première donnée (12) se présente sous la forme d'un bit.

5. Procédé suivant la revendication 2 ou 4, **caractérisé en ce que** l'on transmet la deuxième donnée (17) au capteur (14) et, lors de la détection pour la première fois d'un repère (3) de référence du capteur (14), on la mémorise comme première donnée (12) dans le capteur.

6. Procédé suivant l'une des revendications précédentes, **caractérisé en ce que** l'unité (15) de contrôle fait partie d'un dispositif (9) de commande et/ou de régulation pour la commande et/ou la régulation de l'élément mobile.

7. Procédé suivant l'une des revendications 2, 4, 5, et 6, **caractérisé en ce que** l'on transmet la première donnée (12) ensemble avec la position déterminée.

8. Procédé suivant l'une des revendications précédentes, **caractérisé en ce que**, lorsque la tension (Uᵥ) extérieure d'alimentation du capteur (14) est coupée, on alimente au moins une partie du capteur (14) par le premier accumulateur (13) d'énergie supplémentairement en énergie électrique, de manière à ce que des incréments franchis soient comptés.

9. Système de mesure, dans lequel le système de mesure a un capteur (14) de détermination de la position d'un élément (20) mobile, le système de mesure ayant un premier accumulateur (13) qui, lorsque la tension (Uᵥ) électrique extérieure d'alimentation du capteur (14) est coupée, alimente au moins une partie du capteur (14) en énergie électrique, de manière à ce qu'un état mémorisé de compteur du capteur (14) reste conservé lorsque la tension (Uᵥ) électrique extérieure d'alimentation est coupée, le premier accumulateur (13) d'énergie produisant une première tension (U_{H1}) auxiliaire d'alimentation, **caractérisé en ce qu'**une première donnée (12) peut, lors de la détection pour la première fois d'un repère (3) de référence du capteur (14), être mémorisée dans le capteur (14), dans lequel, lorsqu'une tension (Uᵥ) électrique extérieure d'alimentation du capteur (14) est coupée, et lorsqu'une première tension (U_{H1}) auxiliaire d'alimentation du capteur (14) est coupée, la première donnée (12) peut être effacée.

10. Système de mesure suivant la revendication 9, **caractérisé en ce que**, après le rétablissement de la première tension (Uᵥ) électrique extérieure d'alimentation, la première donnée (12) peut être transmise par le capteur (14) à une unité (15) de contrôle, la première donnée 12 pouvant être comparée à une deuxième donnée (17) par l'unité (15) de contrôle, l'unité (15) de contrôle détectant une position déterminée défectueuse, s'il n'y a pas coïncidence de la première donnée et de la deuxième donnée.

11. Système de mesure suivant la revendication 9, **caractérisé en ce que**, après le rétablissement de la tension (Uᵥ) électrique extérieure d'alimentation, et dans le cas de la présence d'une première donnée (12) effacée, la position déterminée ayant une somme de contrôle défectueuse peut être transmise à une unité (15) de contrôle, la somme de contrôle pouvant être contrôlée par l'unité (15) de contrôle, l'unité (15) de contrôle détectant une position déterminée défectueuse lorsqu'une somme de contrôle est détectée comme défectueuse.

12. Système de mesure suivant l'une des revendications 9 à 11, **caractérisé en ce que** le système de mesure a un deuxième accumulateur (26) d'énergie, le deuxième accumulateur (26) d'énergie fournissant l'énergie pour l'effacement de la première donnée (12).

13. Machine-outil, machine de production et/ou robot ayant un système de mesure suivant l'une des revendications 9 à 12.
